# EUROPEAN PATENT APPLICATION

(11) **EP 4 826 591 A1**
(43) Date of publication of application: **21.10.2026**
(21) Application number: 26170869.7
(22) Date of filing: 07.04.2026
(51) Int. Cl.: G06F 40/30, G06F 40/56

(54) **DISTANCE-BASED CONSTRAINT FOR REFLECTIVE SYNTHETIC NATURAL LANGUAGE STATEMENTS**

(30) Priority: 07.04.2025 US 202519172291
(71) Applicant: Capital One Services, LLC, McLean, Virginia 22102 (US)
(72) Inventor: KAZEMI RAD, Melissa, McLean, VA 22102 (US); SOROWER, Mohammad, McLean, VA 22102 (US)
(74) Representative: Boult Wade Tennant LLP

(57) **Abstract**

A device and related method may generate and validate synthetic natural language statements from anchor statements using a radius-based constraint. Some embodiments may generate vectors for anchor and synthesized statements using an embedding model, determine a candidate label with a scope label model and a label definition dataset, and check if criteria are satisfied by evaluating the embedding space distance and label match to validate a synthesized statement.

## Description

### SUMMARY

Natural language models exhibit performance that directly reflects their training data characteristics. The linguistic capabilities and outputs generated by these language models derive from the composition, size, and quality of text used in model development. Research data shows that factors like text diversity, language coverage, and domain representation within the training data shape a model's ability to understand context, generate relevant responses, and handle various linguistic tasks. Analytical studies indicate that training data containing biases, limited language varieties, or domain gaps leads to corresponding weaknesses in model performance across different language processing scenarios.

Language data annotation involves systematic work by linguistic experts who analyze and label text according to specific guidelines. These professionals process extensive amounts of text to mark linguistic features, classify content types, identify semantic relationships, and validate translation pairs. The annotation workflow faces challenges such as resolving ambiguous meanings, maintaining consistent labeling across annotators, and ensuring quality over long sessions of detailed text analysis. Industry practices show that successful language data preparation incorporates multiple validation steps, cross-annotator agreement checks, and regular assessment protocols to develop high-quality training datasets for language models.

Some embodiments may resolve such issues and other issues by generating a synthesized statement that is set to a heterogeneity radius by balancing an embedding space distance between a minimum distance and a requirement for a shared scope. Some embodiments may generate a synthesized natural language statement based on an anchor statement that is associated with a first label. Some embodiments may generate a first vector in an embedding space by providing the anchor statement to an embedding model and a second vector in the embedding space by providing the synthesized natural language statement to the embedding model. Some embodiments may determine a candidate scope label by providing a scope label model with the synthesized natural language statement and a label definition dataset that includes a first label-definition pair indicating the first label and its associated definition. Furthermore, some embodiments may then determine that (1) a first criterion for increasing statement heterogeneity is satisfied, which requires that the embedding space distance between the first vector and the second vector exceeds a predefined distance threshold, and (2) a second criterion for bounding heterogeneity is satisfied, which requires that the candidate scope label matches the first label. Additionally, some embodiments may store the synthesized natural language statement in a data store storing synthesized data by validating it based on the first and second criteria being satisfied.

some embodiments may apply additional criteria to synthesized data, such as a criterion that at least one of a set of transformation policies are adequately applied to a synthesized statement. Furthermore, in some embodiments, criteria used to test synthesized data may be subject to change based on a downstream generation objective. In some embodiments, operations to change the criteria themselves be subjected to a criterion that the first criterion for increasing heterogeneity and the second criterion for bounding heterogeneity are satisfied for the purpose of maintaining a constrained objective function.

By using a heterogenous mix of standards to generate synthesized statements or performing other operations described in this disclosure, some embodiments may generate functionally useful volumes of training data even when original amounts of data are sparse. Furthermore, such operations may reduce the need for manual annotation. Additionally, embodiments performing operations described in this disclosure may increase data heterogeneity by enforcing a predefined distance in the embedding space while still maintaining scope consistency through use of the evaluation model. In addition, the generation and use of recalibration instructions permits some embodiments to reflect previously failed criteria to resynthesize statements with an evolving set of prompts. Such operations may contribute to the overall effectiveness and reliability of a synthetic data generation framework.

Various other aspects, features, and advantages of the invention will be apparent through the detailed description of the invention and the drawings attached hereto. It is also to be understood that both the foregoing general description and the following detailed description are examples and are not restrictive of the scope of the invention.

### BRIEF DESCRIPTION OF THE DRAWINGS

FIG. 1 shows an example system for generating and validating synthesized statements, in accordance with one or more embodiments.
FIG. 2 shows an example conceptual architecture for generating and validating synthesized statements, in accordance with one or more embodiments.
FIG. 3 shows a flowchart of a process for generating and validating synthesized statements, in accordance with one or more embodiments.

The technologies described herein will become more apparent to those skilled in the art by studying the detailed description in conjunction with the drawings. Embodiments of implementations describing aspects of the invention are illustrated by way of example, and the same references can indicate similar elements. While the drawings depict various implementations for the purpose of illustration, those skilled in the art will recognize that alternative implementations can be employed without departing from the principles of the present technologies. Accordingly, while specific implementations are shown in the drawings, the technology is amenable to various modifications.

### DETAILED DESCRIPTION OF THE DRAWINGS

In the following description, for the purposes of explanation, numerous specific details are set forth in order to provide a thorough understanding of the embodiments of the invention. It will be appreciated, however, by those having skill in the art that the embodiments of the invention may be practiced without these specific details or with an equivalent arrangement. In other cases, well-known structures and devices are shown in block diagram form in order to avoid unnecessarily obscuring the embodiments of the invention.

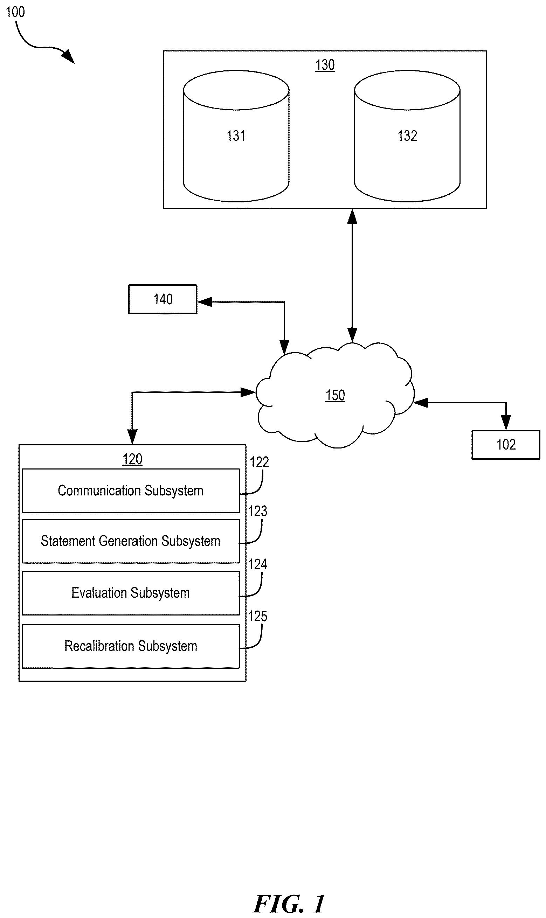

FIG. 1 shows an example system 100 for generating and validating synthesized statements, in accordance with one or more embodiments. A system 100 includes a client device 102 in communication with a server 120 via a network 150. As will be described further in this disclosure, the server 120 may perform operations to synthesize data.

In some embodiments, the system 100 may perform operations to generate synthesized data from anchor data. Some embodiments may generate a synthesized statement based on an anchor statement that is associated with a first label. For example, some embodiments may provide the anchor statement "the weather is sunny" to a large language model being used as a statement generation model to generate a synthesized statement such as "the sky is clear and bright." By using a large language model to generate statements, some embodiments may be able to generate new responses based on context and changing trends rather than predefined rules. Some embodiments may generate vectors from the generated or anchor statements to determine distances, determine scope labels, and determine, based on the distances and labels, whether a set of validating criteria is satisfied. In response to determining that the criteria are satisfied, some embodiments may validate the synthesized statement for storage in a data store storing synthesized data or otherwise use the synthesized statement to perform downstream actions.

They may generate a first vector by providing the anchor statement to an embedding model and a second vector by providing the synthesized statement to the embedding model. For example, a computer system may generate a first vector by providing the anchor statement "the dog is barking" to an embedding model and generate a second vector by providing the synthesized statement "the canine is howling" to the embedding model. Some embodiments may determine a candidate label by providing a scope label model with the synthesized statement and a label definition dataset that includes the first label and its associated definition. For example, if the synthesized statement is "The sky is clear," and the label definition dataset includes the pair "weather condition" and "a description of the current weather," a scope label model of an evaluation model may determine that the candidate label is "weather condition" by providing the label definition dataset and the synthesized statement to the scope label model. Some embodiments may then determine a result indicating whether a set of criteria is satisfied by checking if (1) the embedding space distance between the determined vectors exceeds a predefined minimum distance threshold and (2) the candidate label matches the first label. For example, some embodiments may determine a result indicating whether a set of criteria is satisfied by checking if (1) the embedding space distance between a vector representation of "The dog is barking" and a second vector representation of "The canine is howling" exceeds a minimum distance threshold and (2) if a first label associated with the anchor statement (e.g., "dog-related") is equal to a label associated with a label associated with the generated statement (e.g., is also "dog-related"). Some embodiments may then validate the synthesized statement for storage in a data store storing synthesized data based on the result. By applying a heterogeneous predefined minimum distance threshold in combination with a label-matching criteria to validate statements, some embodiments may significantly increase the likelihood of statement data diversity without losing the scope of the statements.

The client device 102 may include one of various types of computer devices usable as a client-side device, such as a laptop, data terminal, mobile computing device, etc. The client device 102 may send requests, responses, or other messages to the server 120 that may require communication with other computing devices or other electronic devices. Additionally, the server 120 may include various types of computing units, such as physically separate servers, virtual nodes hosted on one or more physical machines, or nodes on a cloud computing system. Applications, services, or other operations may use data provided by the client device 102, the server 120, a large language model subsystem 140, or a set of databases 130 that includes a first networked database 131 and a second networked database 132. The set of databases 130 may include various types of databases, such as SQL databases, no SQL databases, graph databases, etc. In some embodiments, the server 120 may perform one or more operations related to a communication subsystem 122, a statement generation subsystem 123, an evaluation subsystem 124, or a recalibration subsystem 125.

In some embodiments, the communication subsystem 122 may obtain program instructions, commands, parameters, values, or other data from the server 120 or the set of databases 130. For example, some embodiments may use the communication subsystem 122 to provide the server 120 with anchor statements, associated labels for the anchor statements, transformation policies, or label definitions from the set of databases 130 or the client device 102. Furthermore, operations performed by the client device 102 may use the communication subsystem 122 to send messages to the set of databases 130, the server 120, or another computing device described in this disclosure. For example, some embodiments may use the communication subsystem 122 to send synthesized statements generated by the server 120 to the set of databases 130. Furthermore, some embodiments may use the communication subsystem 122 to communicate with one or more remote computing devices to offload some or all of the operations described in this disclosure. For example, the server 120 may send data to the large language model subsystem 140 to execute a large language model used to generate statements, evaluate statements, or generate recalibration instructions.

In some embodiments, the statement generation subsystem 123 may transform anchor data, such as an initial natural language statement or other statement, into a synthesized statement based on a set of transformation policies. For example, the statement generation subsystem 123 may receive, at an application program interface (API) endpoint, API requests containing an input prompt that includes anchor statements, transformation policies, or label definitions. In some embodiments, the statement generation subsystem 123 may also receive additional parameters, such as temperature parameter to control generational, a maximum token limit controlling response length, or stop sequences that define a sequence for which generation should end. The statement generation subsystem 123 may forward these parameters to a neural network architecture, such as one that employs attention mechanisms and transformer layers to generate new tokens based on the original input. The statement generation subsystem 123 may then stream these generated tokens out to form synthetic natural language statements or other types of synthesized statements (e.g., synthesized program instructions, synthesized program code, etc.). For example, if the anchor data is "The cat is on the mat," the statement generation subsystem 123 may construct an input based on the anchor data, a transformation policy, and a label definition to construct a synthesized statement be "the carnivore is under the table."

In some embodiments, the evaluation subsystem 124 may evaluate synthesized statements to determine whether they satisfy a set of constraints or other types of criteria. The evaluation subsystem 124 may evaluate the data diversity of a statement, determine matches with one or more labels indicating shared scope similarity, and determine whether one or more transformation policies are satisfied. The evaluation subsystem 124 may determine whether each new data point is sufficiently different from its corresponding anchor data by enforcing a predefined distance in the embedding space. Additionally, the evaluation subsystem 124 may verify that the new data retains the same scope or label as the anchor data using an evaluation model. For example, the evaluation subsystem 124 may include a scope label model to apply a scope label to construct a model input that includes a synthesized statement (e.g., one synthesized by the statement generation subsystem 123), some or all of the label definitions 208, and a prompt to apply one or more labels to the synthesized statement. The evaluation subsystem 124 may then deliver this model input to the large language model subsystem 140 to determine a candidate scope label and compare this candidate scope label to an original scope label associated with the anchor statement used to generate the synthesized statement. The anchor statement may include various types of statements, such as a natural language statement, statements containing abbreviations or vernacular, statements containing one or more icons, program code written in a programming language (e.g., C, C++, Java, Javascript, Python, Rust, etc.), etc. Furthermore, it should be understood that, while the large language model subsystem 140 is shown as separate from the server 120 in the system 100, in some embodiments, the large language model subsystem 140 may be a part of the server 120, such as part of the statement generation subsystem 123, the evaluation subsystem 124, or the recalibration subsystem 125. Furthermore, while the large language model subsystem 140 is shown as a single component, multiple types of language models may be part of the system 100 or accessed by one or more components of the system 100.

In some embodiments, the evaluation subsystem 124 may use a large language model to perform one or more evaluation tasks. For example, the evaluation subsystem 124 may send instructions to the large language model to assign a candidate label to a synthesized statement, where a validation criterion is that the candidate label matches with the original label of an anchor statement used to generate the synthesized statement. Additionally, the evaluation subsystem 124 may use a large language model to determine whether transformed data adheres to a set of transformation policies. In some embodiments, if one or more criteria is not satisfied, the evaluation subsystem 124 may indicate that a synthesized statement is invalid and perform an associated downstream operation, such as using the evaluation subsystem 124.

In some embodiments, the recalibration subsystem 125 may generate recalibration instructions to generate updated synthesized statements. For example, when the evaluation subsystem 124 determines that a synthesized statement does not satisfy one or more criteria discussed above, the recalibration subsystem 125 may generate recalibration instructions for the statement generation subsystem 123, where the recalibration instructions may reflect indicated criteria failures. In some embodiments, this process may be repeated until the transformed data satisfies all the constraints or until a maximum number of iterations is reached.

In some embodiments, the recalibration subsystem 125 may use chain of thought (CoT) reasoning to generate improved recalibration instructions. For example, as a part of the evaluation process, the evaluation subsystem 124 may generate a text sequence indicating a CoT reasoning indicating why a set of criteria is satisfied or not satisfied. The recalibration subsystem 125 may then determine the portion of the CoT reasoning text associated with the failed criteria and use this portion to reflect on these failures by formulating a set of recalibration instructions. The CoT reasoning text may include explanations generated by the evaluation model, where the explanation may then be used to guide the generation large language model into making the adjustments for additional synthetic data. Such reflective operations may improve downstream accuracy and utility of synthesized statements.

As an example, after constructing the transformed data "The dog is under the table" based on anchor data "The cat is on the mat," the evaluation subsystem 124 may identify that the transformed data does not satisfy a required policy that the animal stays the same. A large language model may generate a Chain-of-Thought (CoT) reasoning indicating this failure, where lines 15-16 indicates which policy was failed, such as by reciting "the transformed data fails the requirement that the animal stays the same because the original data states 'cat' and the transformed data states 'dog.'" The recalibration subsystem 125 may then determine select this portion of the CoT reasoning text and use this portion to formulate a set of recalibration instructions with a large language model. For example, the recalibration instruction might include "Never change animals, keep the cat as a cat." By using excerpts of CoT reasoning text, the recalibration subsystem 125 may provide more accurate and targeted instructions for data generation.

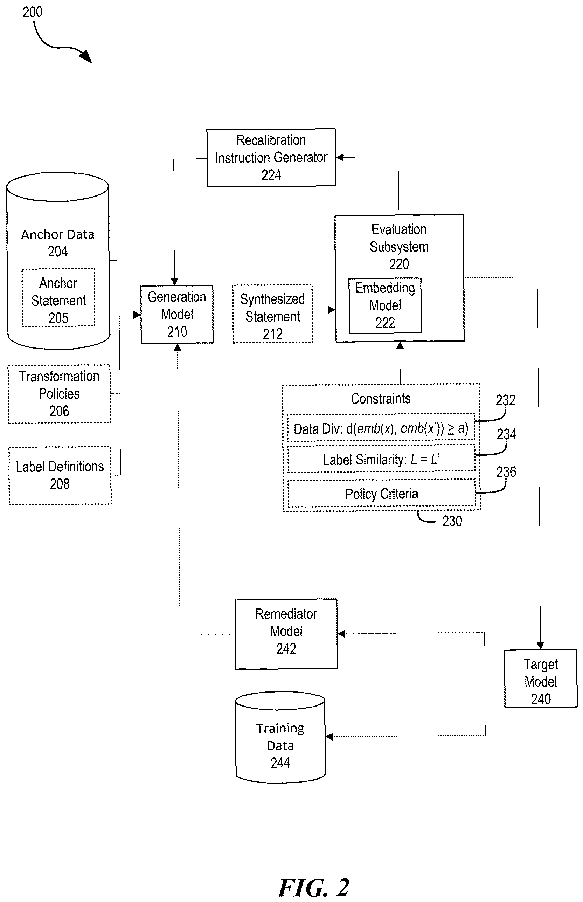

FIG. 2 shows an example conceptual architecture 200 for generating and validating synthesized statements, in accordance with one or more embodiments. The conceptual architecture 200 may include an anchor data database 204. The anchor data database 204 may include anchor data including anchor statements and their corresponding labels. For example, the anchor data database 204 includes an anchor statement 205. The statements stored in the anchor data database 204 may be used as "ground truth" examples and may be denoted as (*x*ᵢ, *l*ᵢ). Some embodiments may provide the anchor statement 205, transformation policies 206 and label definitions 208 to a generation model 210 to generate a synthesized statement 212.

The statements in the anchor data database 204 may be or may include a combination of multiple statements, such as a first natural language statement given by one entity and a second natural language statement given by another entity. For example, an anchor statement stored in the anchor data database 204 may include a first natural language statement given by a first person, such as "the weather is sunny," and a second natural language statement given by a second person, such as "The sky is clear and bright." Some embodiments may store multiple statements in one or more multi-turn conversation as a single statement, where operations described in this disclosure may be used to synthesize conversations between multiple parties.

Some embodiments may then provide the synthesized statement 212 to an evaluation subsystem 220, which may include an embedding model 222. The embedding model 222 may consume the synthesized statement 212 and provide an output that includes a first embedding vector representing synthesized values. Similarly, the embedding model 222 may consume the anchor statement 205 to output a second embedding vector representing the anchor statement 205.

The evaluation subsystem 220 may perform various types of operations to determine that a set of criteria 230 is satisfied. The evaluation subsystem 220 may then compare the two embedding vectors in accordance with a first constraint represented by a first box 232 shown in the set of criteria 230. For example, the first constraint may enforce a radius-based constraint requiring that a synthesized statement, such as the synthesized statement 212, is outside a minimum radius "*a*" from its respective anchor data (e.g., the anchor statement 205) in the embedding space. This radius-based constraint may obtain the minimum radius "*a*" as a predefined distance from a configuration file, a user input, a data table associating different distances with different types of domains, an API endpoint, etc.

The evaluation subsystem 220 may also enforce other criteria, such as a second constraint represented by the second box 234 shown in the set of criteria 230. The second constraint represented by the second box 234 may implement a requirement that a synthesized statement (e.g., the synthesized statement 212) retain the same label (e.g., same scope-defining label) as the anchor statement used to generate the synthesized statement, (e.g., the anchor statement 205). In some embodiments, the evaluation subsystem 220 may provide the synthesized statement 212 in conjunction with the label definitions 208 to an LLM to determine what labels should be applied to the synthesized statement 212. In the event that the output label L' is a match with the label *L* associated with the anchor statement 205, then this second constraint may be considered to be satisfied.

The evaluation subsystem 220 may also enforce other criteria, such as a third constraint represented by the third box 236 shown in the set of criteria 230. The third constraint represented by the third box 236 may implement a requirement that the transformation from an anchor statement (e.g., the anchor statement 205) to a synthesized statement (e.g., the synthesized statement 212) satisfy the transformation policies 206. For example, a set of transformation policies may include the first text "all verbs between anchor statements and synthesized statements are different." The evaluation subsystem 220 may provide the first transformation policy, the anchor statement 205, and the synthesized statement 212 to an LLM to evaluate whether the set of transformation policies is satisfied. For example, the evaluation subsystem 220 may determine that the constraint represented by the first text is not satisfied if the anchor statement 205 includes the statement "the cat is happy" and the synthesized statement 212 include the statement "the dog is blue."

In response to a determination that the set of criteria 230 is not satisfied, some embodiments may proceed to send the synthesized statement 212 to a recalibration instruction generator 224. The recalibration instruction generator 224 may generate recalibration instructions that replaces, updates, or augments the text generation prompt used to have generated synthesized statement 212. The recalibration instruction generator 224 may then provide these recalibration instructions back to the generation model 210 to generate another synthesized statement. The recalibration instruction generator 224 may receive an indication of what criteria of the set of criteria 230 was not satisfied in order to construct a more accurate model.

In some embodiments, the evaluation subsystem 220 may produce a CoT reasoning output that permits a system implementing the conceptual architecture 200 to reflect on failed criteria and produce better synthetic data. The evaluation subsystem 220 may indicate that the criterion represented by the second box 234 was not satisfied and further how the label L' for the synthesized statement 212 was generated. For example, the evaluation subsystem 220 may produce a CoT reasoning output that recites a first reasoning part "'the blue cat is red' was labeled 'contradictory statement,' whereas the original label is 'tautological statement'" and a second reasoning part "I am generating this statement because the transformation policies include instructions to 'change at least one color if possible.'" The recalibration instruction generator 224 may use these two statements to construct a recalibration instruction that recites "when changing color names, change every instance of that color name" by providing both the first and second reasoning parts to an LLM configured to construct recalibration instructions. By performing such operations, the output of the recalibration instruction generator 224 may generate more effective synthetic data by permitting new instruction to reflect CoT outputs indicating previous failures. The recalibration instruction generator 224 may provide this recalibration instruction to the generation model 210 to generate a second version of the synthesized statement 212.

In response to a determination that the set of criteria 230 is satisfied, some embodiments may proceed to use the synthesized statement 212 to for downstream operations, such as operations performed by a target model 240. In many cases, the target model 240 may be model to be used in a production environment that is computationally less expensive than the types of models used by the evaluation subsystem 220. In such cases, finding edge cases for the target model 240 may be important to increase the accuracy of training systems. For example, some embodiments may determine that the synthesized statement 212 is one such edge case and, in response, store the data in training data store 244. Alternatively, some embodiments may determine that the synthesized statement 212 does not qualify as an edge case and, in response, discard the synthesized statement 212 and update statement generation instructions using a remediator model 242.

### Flowchart

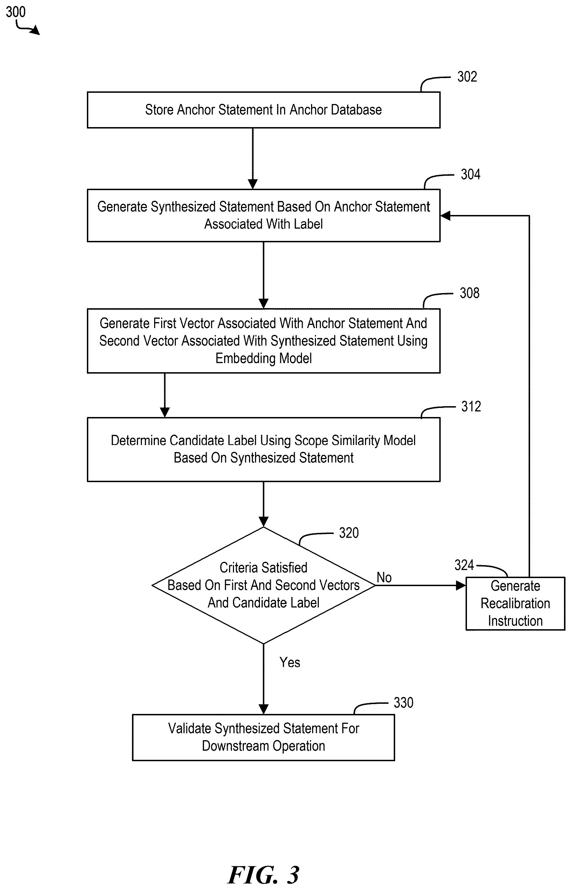

FIG. 3 shows a flowchart of a process 300 for generating and validating synthesized statements, in accordance with one or more embodiments. Some embodiments may store data in an anchor database, as indicated by block 302. Some embodiments may be stored in databases using various formats and structures depending on access patterns and source characteristics. Some embodiments may store relational databases that organize data in structured tables with defined schemas. Some embodiments may store data in NoSQL databases having document stores (e.g., JavaScript Object Notation/Binary JavaScript Object Notation), key-value pairs, wide-column stores, or graph structures. Some embodiments may store data having associations with one or more labels and may store different types of datasets. For example, some embodiments may store the phrase "I want my password" in association with the labels "information request," "unauthorized question," and "bad question." Some embodiments may further store a set of label definitions that link labels with an associated descriptor. Some embodiments may further store a set of transformation policies that indicate ways in which synthesized statements should be, may be, or should not be transformed from their base anchor statements.

Some embodiments may adapt multi-turn conversations for synthetic generation. Some embodiments may determine that a first text sequence is part of the same conversation as a second text sequence. Some embodiments may then concatenate the first text sequence with the second text sequence to form the synthesized statement before generating the synthesized statement based on the anchor statement being used as a user-provided natural language statement. For example, a computer system may determine that a first text sequence "I'd like to find out my account information" is part of the same conversation as a second text sequence "I can't remember my dog's name." The computer system may then concatenate the first text sequence with the second text sequence to form a combined anchor statement before generating the synthesized statement based on the combined anchor statement. Furthermore, some embodiments may preserve turn order, such that the first text sequence is stored part of a first section of a record and the second text sequence is stored as part of a second section of the record.

Some embodiments may generate a synthesized statement based on the anchor statement associated with a first label, as indicated by block 304. Some embodiments may generate a synthesized natural language statement based on a user-provided natural language statement or another type of anchor statement that is associated with a first label. For example, some embodiments may obtain, as a first anchor statement, a user-provided natural language statement "the cat is on the mat" and the first label "animal location" from an anchor database, where the anchor database indicates that the first anchor statement is associated with the first label. Some embodiments may then generate the synthesized statement "the feline rests on the rug" by providing the first anchor statement to a statement generation model.

Some embodiments may use a set of transformation policies when generating statements. Some embodiments may obtain the set of transformation policies, where a transformation policy may indicate a possible or required transformation for anchor data, a prohibition on certain types of transformations of anchor data, etc. For example, if the anchor statement is "the cat is on the mat," some embodiments may provide, to a generation model, a transformation policy in the form of an additional prompt instruction that requires changing the subject and object while maintaining the context, the synthesized statement could be "The dog is under the table." A set of transformation policies may include natural language statements, program instructions, logical statements, etc.

As described above, some embodiments may preserve turn order when storing text involving multi-turn conversations, such that the first text sequence is stored part of a first section of a record and the second text sequence is stored as part of a second section of the record. Some embodiments may then generate a synthesized statement by transforming the first section and preserving the second section. Alternatively, some embodiments may generate a synthesized statement by preserving the first section and transforming the second section. Furthermore, some embodiments may generate a synthesized statement by transforming both the first section and the second section.

Some embodiments may receive requests via an API endpoint, such as via an API endpoint accessed through a development kit. For example, some embodiments may receive an API request having an anchor statement or other anchor data, where the API request is made by a function provided as part of a software development kit (SDK). In some embodiments, the function, or another component of the SDK, may also provide a generation model with the set of transformation policies. For example, the API request may also include a document that includes a set of transformation policies which are provided to the generation model. Alternatively, or additionally, the API request may include an identifier that is used to determine what transformation policies to use. For example, based on a determination that the API request includes "leaf blower" as an identifier associated with the anchor statements, some embodiments may retrieve a set of transformation policies associated with the identifier "leaf blower" from an internal database.

Some embodiments may store and access multiple databases storing anchor statements. such as by storing a first natural language statement in a first anchor statement database and a second natural language statement in a second anchor statement database. Some embodiments may determine which statements to store in which database based on categories or other metadata associated with the statements. For example, some embodiments may obtain a first statement related to weather conditions and store the statement in a database categorized under "weather" instead of a database categorized under "sports." Some embodiments may then receive a request to synthesize natural language statements, wherein the request is associated with a category and in response select a relevant anchor statement database in lieu of statements stored in other databases based on the category. For example, a computer system may receive a request to synthesize natural language statements, where the request is associated with a category such as "weather conditions." In response, the computer system may select a statement stored in a database categorized under "weather" in lieu of statements stored in other databases categorized under "sports" or "finance."

Some embodiments may obtain user feedback or other feedback to determine whether to add one or more statements to a database for use as an anchor statement. Some embodiments may obtain a priority score associated with a multi-turn conversation that includes a set of natural language statements. For example, a computer system may receive a feedback score from a user indicating the usefulness of a customer support chat that includes multiple exchanges between a customer and a support agent. Some embodiments may determine a result indicating that the priority score satisfies a set of reporting criteria, such as exceeding a score threshold. In response, some embodiments may store one or more statements of the multi-turn conversation in a database to be used as a set of anchor statements. For instance, after determining that a user feedback score for a customer chat is less than two out of a maximum score of five, a computer system may include some or all of the statements made by a user and an agent of the customer chat. Some or all of these stored statements may then be used as anchor statements for generating synthesized responses in future interactions. Furthermore, some or all of these operations may be performed in real time. For example, a computer system may store, in a database, a user-provided chat response created in a chat communication session with an agent. The computer system may then automatically generate or validate one or more synthetic statements based on the stored chat responses using operations described in this disclosure while the user is still interacting with the agent.

Some embodiments may generate a first vector associated with the anchor statement and a second vector associated with the synthesized statement by using an embedding model, as indicated by block 308. Some embodiments may generate a first vector in an embedding space by providing the anchor statement to an embedding model and a second vector in the embedding space by providing the synthesized natural language statement to the embedding model. For example, some embodiments may provide the anchor statement "the cat is on the mat," to an embedding model to generate a first vector representing this statement in the embedding space. Additionally, some embodiments may provide the synthesized statement "The feline rests on the rug" to the embedding model to generate a second vector representing this synthesized statement in the embedding space. An embedding model may include a neural network with trained parameters and activation functions, where the embedding model may transform discrete input data into vectors within an embedding space.

Some embodiments may determine a candidate label using a scope label model based on the synthesized statement, as indicated by block 312. Some embodiments may determine a candidate label by providing a labeling model with the synthesized statement and a label definition dataset that includes the first label and its associated definition. In some embodiments, the labeling model may include a language model, such as a large language model. In some embodiments, the language model may include a foundation model comprising billions of nodes and one or more fine-tuning layers trained for specific domains. In some embodiments, the labeling model may receive, in an input context or as some other part of an input for the labeling model, a label definition dataset indicating the label criteria used to determine when a text sequence should be assigned a label. For example, a label definition dataset may include a table of eight rows, where each row comprises a label and a corresponding label definition. Some embodiments may receive this label definition dataset in conjunction with instructions to assign one or more labels for a synthesized statement. For example, some embodiments may provide, as part of an input to a large language model that is used as part of a labeling model, a synthesized statement, a data table of label definitions and the prompt "based on the table, what labels should be assigned to the synthesized statement?".

Some embodiments may use a non-large language model classifier to determine a label. Some embodiments may use a classifier model that may retrieve the outputs of vectors generated from the synthesized statement to determine a label. For example, a computer system may first generate a set of vectors in an embedding space by providing the synthesized statement "I like cats" to an embedding model. Some embodiments may then provide the set of vectors to the classifier model to determine an output. Some embodiments may then provide a classifier model with a generated vector to obtain a candidate label that is the same as or different from the label associated with an anchor statement.

Some embodiments may determine whether a set of criteria is satisfied based on the first and second vectors and the candidate label, as indicated by block 320. In some embodiments, the set of criteria may include various types of criteria, such as criteria based on embedding space distances, criteria based on the labels, or criteria based on whether transformation policies are satisfied.

As described elsewhere in this disclosure, the set of criteria may include criteria based on embedding space distances. Some embodiments may determine an embedding space distance between a vector representing synthesized statements and a vector representing an anchor statement. When determining distances to compare with a criterion threshold, some embodiments may use one or more various types of distances, such as cosine similarity measures, Euclidean distances, Manhattan distances, Mahalanobis distances, etc. For example, some embodiments may determine Euclidean distances between two vectors.

As described elsewhere in this disclosure, the set of criteria may include criteria based on the labels, such as a criterion for a label match. For example, if a synthesized statement is "The feline rests on the rug," and the label definition dataset includes the pair "animal location" and "a place where an animal is situated," a scope label model be provided with these values as model inputs to output a candidate scope label "animal location." Some embodiments may then determine that the candidate scope label matches the first label "animal location" and, in response, determine that the criterion for a label match is satisfied.

As described elsewhere in this disclosure, the set of criteria may include criteria based on whether transformation policies are satisfied. Some embodiments may provide an anchor statement, a synthesized statement transformed from the anchor statement, and a document indicating the set of transformation policies to an evaluation language model. The evaluation language model may include a large language model and may output text indicating whether the policies of the set of transformation policies is satisfied. For example, if the transformation policy requires that the subject of the sentence remains the same, the anchor statement is "The cat is on the mat," and the output statement is "the cat likes the table," the evaluation language model may output text such as "the transformation policy is satisfied because the subject 'cat' remains unchanged." Alternatively, if a transformation policy requires that the verb remains the same, the anchor statement may indicate failure, such as "the transformation policy is not satisfied because 'is' is different from 'likes.'" Furthermore, some embodiments may perform similar checks for each discrete transformation policy of a set of transformation policies.

It should be understood that some embodiments may use criteria based on confidence values. For example, some embodiments may generate a confidence score corresponding with a criterion for a label match. In the event that the confidence score exceeds a confidence score threshold, some embodiments may determine that the criterion is satisfied. In the event that the confidence score does not exceed the confidence score threshold, some embodiments may determine that the criterion is not satisfied.

Some embodiments may generate a set of recalibration instructions, as indicated by block 324. Some embodiments may determine that one or more criteria is not satisfied and, in response, generate recalibration instructions for generating additional synthesized statements, where such recalibration instructions may reflect the additional synthesized statements. Before generating a validated synthesized statement from an anchor statement using a generation model, some embodiments may have generated an earlier synthesized statement based on the anchor statement and determined an earlier result indicating that a set of validation criteria is not satisfied. For example, a computer system may transform an anchor statement "cats are good" into a synthesized statement, "dogs may be nice" and use an evaluation model to check this synthesized statement against a set of validation criteria. The computer system may then determine that the synthesized statement does not meet a diversity criterion because it is too similar to the anchor statement and generate a result indicating that the validation criteria are not satisfied.

Some embodiments may obtain CoT reasoning text produced during one or more operations described for block 312, block 320, or elsewhere (e.g., as part of the recalibration instruction generation process). For example, while generating the result indicating that the validation criteria are not satisfied, some embodiments may generate CoT reasoning text. Some embodiments may then construct recalibration instructions based on criterion-relevant text of the text sequence associated with the criterion, wherein generating the synthesized statement comprises generating the synthesized statement based on the recalibration instructions. For example, the CoT reasoning text provided by an evaluation model may include a detailed explanation of why the diversity criteria were not met, such as "the transformed data does not introduce enough variation in the subject and object compared to the anchor data."

After obtaining CoT reasoning text, some embodiments may then determine a portion of the CoT reasoning text associated with the failed diversity criteria and use this portion to formulate a set of recalibration instructions. For example, a computer system may include the statement "increase the variation in the subject and object to ensure greater diversity from the anchor data." Some embodiments may then provide the recalibration instructions to a generation large language model to generate a new synthesized natural language statement that is more likely to satisfy the set of criteria. Furthermore, some embodiments may implement an iterative process for a recalibration instruction generator so that instructions may also be based on previously generated CoT reasoning text or previous recalibration instructions generated at an earlier time. For example, a computer system may, in a first iteration, generate a first synthesized statement based on an anchor statement, determine that a set of criteria is not satisfied, and generate first recalibration instructions based on a first CoT reasoning text associated with the first synthesized statement. The computer system may then, may, in a second iteration, generate a second synthesized statement based on the anchor statement, determine that the set of criteria is still not, and generate second recalibration instructions based on some or all of the first recalibration instructions and a second CoT reasoning text associated with the second synthesized statement.

Some embodiments may validate synthesized statements for downstream operations, as indicated by block 330. In some embodiments, the downstream operations may include storage in a data store storing synthesized data, testing a model, performing further filtering operations to determine edge case labels, etc.

Some embodiments may conserve memory or other resources for downstream operations by conserving edge case data while discarding predicted data. Some embodiments may generate a predicted label by providing the synthesized statement to a classification model. For example, a computer system may first generate a synthesized statement from a first anchor statement associated with a first label "dollhouse." The computer system may then determine, with a classifier, that the synthesized statement should be labeled with the label "action figure" lieu of the first label "dollhouse." Some embodiments may then determine a second result indicating whether the predicted label matches the first label and store the synthesized statement in the data store storing synthesized data based on the second result. For example, the computer system may determine that "action figure" is not the same as "dollhouse" and, in response, store the synthesized natural language statement in a database of edge cases. In contrast, if the classifier labeled the synthesized statement with "dollhouse," the computer system may discard the synthesized statement and generate a new synthesized statement. By storing only the edge cases, some embodiments may more efficiently train the classifier during a later training operation.

The above-described embodiments of the present disclosure are presented for purposes of illustration and not of limitation, and the present disclosure is limited only by the claims which follow. Furthermore, it should be noted that the features and limitations described in any embodiment may be applied to one or more other embodiments herein, and flowcharts or examples relating to one embodiment may be combined with any other embodiment in a suitable manner, done in different orders, or done in parallel. In addition, the systems and methods described herein may be performed in real time. It should also be noted that the systems and/or methods described above may be applied to, or used in accordance with, other systems and/or methods. Furthermore, not all operations of a flowchart need to be performed. In addition, the systems and methods described herein may be performed in real time. It should also be noted that the systems and/or methods described above may be applied to, or used in accordance with, other systems and/or methods.

Furthermore, the computing devices described in this disclosure may be any type of computing device unless otherwise stated, including, but not limited to, a laptop computer, a tablet computer, a hand-held computer, and/or other computing equipment (e.g., a server), including "smart," wireless, wearable, and/or mobile devices. For example, while the client device 102 of FIG. 1 may be a head-mounted device, another type of mobile computing device may be possible. Furthermore, the embodiments described in this disclosure may include an individual device that performs some or all the operations described in this disclosure. Alternatively, other embodiments may include multiple computing devices acting collectively to perform some or all the operations described in this disclosure.

As used in the specification and in the claims, the singular forms of "a," "an," and "the" include plural referents unless the context clearly dictates otherwise. In addition, as used in the specification and the claims, the term "or" means "and/or" unless the context clearly dictates otherwise. Additionally, as used in the specification, "a portion" refers to a part of, or the entirety (i.e., the entire portion), of a given item (e.g., data) unless the context clearly dictates otherwise. Furthermore, a "set" may refer to a singular form or a plural form, such that a "set of items" may refer to one item or a plurality of items.

In some embodiments, the operations described in this disclosure may be implemented in a set of processing devices (e.g., a digital processor, an analog processor, a digital circuit designed to process information, an analog circuit designed to process information, a state machine, and/or other mechanisms for electronically processing information). The processing devices may include one or more devices executing some or all of the operations of the methods in response to instructions stored electronically on one or more non-transitory, machine-readable media (e.g., a set of machine-readable storage media), such as an electronic storage medium. Furthermore, the use of the term "media" may include a single medium or combination of multiple media, such as a first medium and a second medium. One or more non-transitory machine-readable media storing instructions may include instructions included on a single medium or instructions distributed across multiple media. For example, non-transitory media may act as one or more memory, where one or more memory may store program instructions that are written as source files or written in machine-executable program code. The processing devices may include one or more devices configured through hardware, firmware, and/or software to be specifically designed for the execution of one or more of the operations of the methods.

In some embodiments, the various computer systems and subsystems illustrated in FIG. 1 or FIG. 2 may include one or more computing devices that are programmed to perform the functions described herein. The computing devices may include one or more electronic storages (e.g., a set of databases accessible to one or more applications depicted in the system 100), one or more physical processors programmed with one or more computer program instructions, and/or other components. For example, the set of databases may include one or more relational databases. Alternatively, or additionally, the set of databases or other electronic storage used in this disclosure may include one or more non-relational databases.

The computing devices may include communication lines or ports to enable the exchange of information with a set of networks (e.g., a network used by the system 100) or other computing platforms via wired or wireless techniques. The network may include the internet, a mobile phone network, a mobile voice or data network (e.g., a 5G or Long-Term Evolution (LTE) network), a cable network, a public switched telephone network, or other types of communication networks or combination of communication networks. A network described by devices or systems described in this disclosure may include one or more communications paths, such as Ethernet, a satellite path, a fiber-optic path, a cable path, a path that supports internet communications (e.g., IPTV), free-space connections (e.g., for broadcast or other wireless signals), Wi-Fi, Bluetooth, near field communication, or any other suitable wired or wireless communications path or combination of such paths. The computing devices may include additional communication paths linking a plurality of hardware, software, and/or firmware components operating together. For example, the computing devices may be implemented by a cloud of computing platforms operating together as the computing devices.

Each of these devices described in this disclosure may also include electronic storages. The electronic storage may include one or more non-transitory machine-readable media (e.g., storage media) that electronically stored information. The storage media of the electronic storages may include one or both of (i) system storage that is provided integrally (e.g., substantially non-removable) with servers or client computing devices, or (ii) removable storage that is removably connectable to the servers or client computing devices via port (e.g., a USB port, a firewire port, etc.) or drive (e.g., a disk drive, etc.). The electronic storages may include one or more of optically readable storage media (e.g., optical disks, etc.), magnetically readable storage media (e.g., magnetic tape, magnetic hard drive, floppy drive, etc.), electrical charge-based storage media (e.g., EEPROM, RAM, etc.), solid-state storage media (e.g., flash drive, etc.), and/or other electronically readable storage media. The electronic storage may include one or more virtual storage resources (e.g., cloud storage, a virtual private network, and/or other virtual storage resources). An electronic storage may store software algorithms, information determined by the processors, information obtained from servers, information obtained from client computing devices, or other information that enables the functionality as described herein.

The processors may be programmed to provide information processing capabilities in the computing devices. As such, the processors may include one or more of a digital processor, an analog processor, a digital circuit designed to process information, an analog circuit designed to process information, a state machine, and/or other mechanisms for electronically processing information. In some embodiments, the processors may include a plurality of processing units. These processing units may be physically located within the same device, or the processors may represent the processing functionality of a plurality of devices operating in coordination. The processors may be programmed to execute computer program instructions to perform functions described herein of subsystems described in this disclosure or other subsystems. The processors may be programmed to execute computer program instructions by software; hardware; firmware; some combination of software, hardware, or firmware; and/or other mechanisms for configuring processing capabilities on the processors.

Some embodiments may perform one or more operations described in this disclosure using an Application-Specific Integrated Circuit (ASIC). An ASIC is a specialized hardware chip designed to perform a specific task or set of tasks with high efficiency. Unlike general-purpose processors, such as CPUs or GPUs, ASICs are custom-built for particular applications, optimizing performance, power consumption, and area efficiency. ASICs are widely used in areas such as cryptocurrency mining, telecommunications, and artificial intelligence (AI), where dedicated hardware can provide significant advantages over more flexible but less efficient alternatives. Implementing a large AI model in an ASIC requires designing custom circuits that accelerate the model's computations while ensuring efficient memory management and data movement. Because AI models, particularly deep learning networks, involve extensive matrix multiplications and tensor operations, specialized hardware units such as systolic arrays or tensor processing units (TPUs) can be integrated to optimize these operations. To overcome this challenge, the system may use weight quantization, memory hierarchy optimization, and on-chip interconnects can be employed to improve throughput and reduce power consumption. To accommodate large models, the system may integrate high-bandwidth memory (HBM) or leverage chiplet architectures, where multiple ASICs work together in a modular fashion to process different portions of the model. Training AI models on an ASIC presents significant challenges since training involves dynamic weight updates and high computational flexibility, which contrasts with the fixed nature of ASICs. To do so, the system may use field-programmable gate arrays (FPGAs) or GPUs during the training phase, then transfer the trained model weights to the ASIC for inference. Alternatively, the system may design ASICs that support on-chip fine-tuning or low-bit precision training, allowing for limited retraining directly on the device. Additionally, co-designing hardware and algorithms ensures that the model architecture is tailored to the ASIC's capabilities, reducing inefficiencies and maximizing performance. By integrating specialized training accelerators, approximate computing methods, and efficient dataflow architectures, ASICs can be optimized for both training and inference, enabling large AI models to operate with minimal energy and latency constraints. Some embodiments may use a custom ASIC to execute a generation model, evaluation model, another machine learning model described in this disclosure. For example, a computer system may include or use a specialized ASIC possessing dedicated circuits for evaluating text and classifying parsed text (e.g., in the form of regular expression matching engines, hardware-based tokenizers, or specialized comparison units). The computer system may then use the dedicated circuits of this specialized ASIC to train or execute a machine learning model used to generate or evaluate text data.

It should be appreciated that the description of the functionality provided by the different subsystems described herein is for illustrative purposes, and is not intended to be limiting, as any of the subsystems described in this disclosure may provide more or less functionality than is described. For example, one or more of subsystems described in this disclosure may be eliminated, and some or all of its functionality may be provided by other ones of subsystems described in this disclosure. As another example, additional subsystems may be programmed to perform some, or all of the functionality attributed herein to one of the subsystems described in this disclosure.

With respect to the components of computing devices described in this disclosure, each of these devices may receive content and data via input/output (I/O) paths. Each of these devices may also include processors and/or control circuitry to send and receive commands, requests, and other suitable data using the I/O paths. The control circuitry may comprise any suitable processing, storage, and/or I/O circuitry. Further, some or all of the computing devices described in this disclosure may include a user input interface and/or user output interface (e.g., a display) for use in receiving and displaying data. In some embodiments, a display such as a touchscreen may also act as a user input interface. It should be noted that in some embodiments, one or more devices described in this disclosure may have neither user input interface nor displays and may instead receive and display content using another device (e.g., a dedicated display device such as a computer screen and/or a dedicated input device such as a remote control, mouse, voice input, etc.). Additionally, one or more of the devices described in this disclosure may run an application (or another suitable program) that performs one or more operations described in this disclosure.

Although the present invention has been described in detail for the purpose of illustration based on what is currently considered to be the most practical and preferred embodiments, it is to be understood that such detail is solely for that purpose and that the invention is not limited to the disclosed embodiments but, on the contrary, is intended to cover modifications and equivalent arrangements that are within the scope of the appended claims. For example, it is to be understood that the present invention contemplates that, to the extent possible, one or more features of any embodiment may be combined with one or more features of any other embodiment.

As used throughout this application, the word "may" is used in a permissive sense (i.e., meaning having the potential to), rather than a mandatory sense (i.e., meaning must). The words "include," "including," "includes," and the like mean including, but not limited to. As used throughout this application, the singular forms "a," "an," and "the" include plural referents unless the context clearly indicates otherwise. Thus, for example, reference to "an element" or "the element" includes a combination of two or more elements, notwithstanding the use of other terms and phrases for one or more elements, such as "one or more." The term "or" is non-exclusive (i.e., encompassing both "and" and "or"), unless the context clearly indicates otherwise. Terms describing conditional relationships (e.g., "in response to X, Y," "upon X, Y," "if X, Y," "when X, Y," and the like) encompass causal relationships in which the antecedent is a necessary causal condition, the antecedent is a sufficient causal condition, or the antecedent is a contributory causal condition of the consequent (e.g., "state X occurs upon condition Y obtaining" is generic to "X occurs solely upon Y" and "X occurs upon Y and Z"). Such conditional relationships are not limited to consequences that instantly follow the antecedent obtaining, as some consequences may be delayed, and in conditional statements, antecedents are connected to their consequents (e.g., the antecedent is relevant to the likelihood of the consequent occurring). Statements in which a plurality of attributes or functions are mapped to a plurality of objects (e.g., a set of processors performing steps/operations A, B, C, and D) encompass all such attributes or functions being mapped to all such objects and subsets of the attributes or functions being mapped to subsets of the attributes or functions (e.g., both/all processors each performing steps/operations A-D, and a case in which processor 1 performs step/operation A, processor 2 performs step/operation B and part of step/operation C, and processor 3 performs part of step/operation C and step/operation D), unless otherwise indicated. Further, unless otherwise indicated, statements that one value or action is "based on" another condition or value encompass both instances in which the condition or value is the sole factor and instances in which the condition or value is one factor among a plurality of factors.

Unless the context clearly indicates otherwise, statements that "each" instance of some collection has some property should not be read to exclude cases where some otherwise identical or similar members of a larger collection do not have the property (i.e., each does not necessarily mean each and every). Limitations as to the sequence of recited steps should not be read into the claims unless explicitly specified (e.g., with explicit language like "after performing X, performing Y") in contrast to statements that might be improperly argued to imply sequence limitations (e.g., "performing X on items, performing Y on the X'ed items") used for purposes of making claims more readable rather than specifying a sequence. Statements referring to "at least Z of A, B, and C," and the like (e.g., "at least Z of A, B, or C"), refer to at least Z of the listed categories (A, B, and C) and do not require at least Z units in each category. Unless the context clearly indicates otherwise, it is appreciated that throughout this specification discussions utilizing terms such as "processing," "computing," "calculating," "determining," or the like refer to actions or processes of a specific apparatus, such as a special purpose computer or a similar special purpose electronic processing/computing device. Furthermore, unless indicated otherwise, updating an item may include generating the item or modifying an existing item. Thus, updating a record may include generating a record or modifying the value of an already-generated value in a record. Additionally, as used in the specification, "a portion" refers to a part of, or the entirety of (i.e., the entire portion), a given item (e.g., data) unless the context clearly dictates otherwise.

Unless the context clearly indicates otherwise, ordinal numbers used to denote an item do not define the item's position. For example, an item that may be a first item of a set of items even if the item is not the first item to have been added to the set of items or is otherwise indicated to be listed as the first item of an ordering of the set of items. Thus, for example, if a set of items is sorted in a sequence from "item 1," "item 2," and "item 3," the first item of a set of items may be "item 2" unless otherwise stated.

### Enumerated Embodiments

The present techniques will be better understood with reference to the following enumerated clauses:
1. A method comprising: generating a synthesized statement based on an anchor statement, the anchor statement associated with a first label; determining a result indicating whether data derived from the synthesized statement and data derived from the anchor statement satisfy a set of criteria; and validating the synthesized statement based on the result.
2. A method comprising: generating a synthesized statement based on an anchor statement, the anchor statement associated with a first label; generating a first vector by providing the anchor statement to an embedding model and a second vector by providing the synthesized statement to the embedding model; determining a candidate label based on the synthesized statement; determining a result indicating whether a set of criteria is satisfied by determining that (1) the first vector and the second vector satisfy a first criterion and (2) the candidate label and the first label satisfies a second criterion; and validating the synthesized statement based on the result.
3. A method comprising: generating a synthesized statement based on an anchor statement, the anchor statement associated with a first label; generating a first vector by providing the anchor statement to an embedding model and a second vector by providing the synthesized statement to the embedding model; determining a candidate label by providing a scope label model with the synthesized statement and with a label definition dataset indicating the first label and a first definition associated with the first label; determining a result indicating whether a set of criteria is satisfied by determining that (1) an embedding space distance between the first vector and the second vector exceeds a pre-defined distance threshold and (2) the candidate label matches the first label; and validating the synthesized statement based on the result.
4. A method comprising: generating a synthesized natural language statement based on an anchor statement, the anchor statement associated with a first label; generating a first vector in an embedding space by providing the anchor statement to an embedding model and a second vector in the embedding space by providing the synthesized natural language statement to the embedding model; determining a candidate scope label by providing a scope label model with the synthesized natural language statement a label definition dataset comprising a first label-definition pair indicating the first label and a first definition associated with the first label; determining that (1) a first criterion for increasing statement heterogeneity is satisfied, the first criterion requiring that an embedding space distance between the first vector and the second vector exceeds a pre-defined distance threshold and (2) a second criterion for bounding heterogeneity is satisfied, the second criterion requiring that the candidate scope label matches the first label; and storing the synthesized natural language statement in a data store storing synthesized data by validating the synthesized natural language statement based on the first criterion and the second criterion being satisfied.
5. A method comprising: generating a synthesized statement based on an anchor statement, the anchor statement associated with a first label; generating a first vector by providing the anchor statement to an embedding model and a second vector by providing the synthesized statement to the embedding model; determining a candidate label by providing a scope label model with the synthesized statement and with a label definition dataset indicating the first label and a first definition associated with the first label; determining a result indicating whether a set of criteria is satisfied by determining that (1) an embedding space distance between the first vector and the second vector exceeds a pre-defined distance threshold and (2) the candidate label matches the first label; and validating the synthesized statement for storage in a data store storing synthesized data based on the result.
6. The method of any of the embodiments described above, wherein the result is a later result, and wherein determining the candidate label comprises using an evaluation language model to determine the candidate label, further comprising: generating an earlier synthesized statement based on the anchor statement; determining an earlier result indicating that the set of criteria is not satisfied; obtaining a text sequence indicating a chain-of-thought reasoning output produced by the evaluation language model; determining a criterion of the set of criteria that is not satisfied based on the text sequence; and constructing recalibration instructions based on criterion-relevant text of the text sequence associated with the criterion, wherein generating the synthesized statement comprises generating the synthesized statement based on the recalibration instructions.
7. The method of any of the embodiments described above, wherein the recalibration instructions is first recalibration instructions, and wherein constructing the recalibration instructions comprises retrieving previous recalibration instructions based on a previous operation to construct a previous synthesized statement based on the anchor statement, wherein constructing the recalibration instructions comprises constructing the recalibration instructions based on at least a portion of the previous recalibration instructions.
8. The method of any of the embodiments described above, wherein the scope label model comprises a large language model, and wherein determining the candidate label comprises providing the large language model with the label definition dataset and instructions to assign a label to the synthesized statement based on the label definition dataset.
9. The method of any of the embodiments described above, wherein: generating the synthesized statement comprises generating the synthesized statement based on a set of transformation policies; determining the result further comprises: providing the synthesized statement and a document indicating the set of transformation policies to an evaluation language model; and obtaining an output from the evaluation language model indicating that the set of transformation policies is satisfied based on the synthesized statement.
10. The method of any of the embodiments described above, wherein determining the result indicating whether the set of criteria is satisfied comprises: generating a confidence score corresponding with a first criterion of the set of criteria; and determining that the confidence score exceeds a confidence score threshold.
11. The method of any of the embodiments described above, wherein the scope label model comprises a classifier model, and wherein determining the candidate label comprises generating the candidate label by providing the classifier model with the second vector.
12. The method of any of the embodiments described above, wherein the result is a first result, further comprising: generating a predicted label by providing the synthesized statement to a classification model; determining a second result indicating whether the predicted label matches the first label; and storing the synthesized statement in the data store storing synthesized data based on the second result.
13. The method of any of the embodiments described above, further comprising: determining that a first text sequence is part of a same conversation as a second text sequence; and concatenating the first text sequence with the second text sequence to form the synthesized statement before generating the synthesized statement based on the anchor statement.
14. The method of any of the embodiments described above, further comprising: receiving a request at an application program interface (API) endpoint associated with a generation model; and determining, based on the request, a set of transformation policies, wherein generating the synthesized statement comprises generating the synthesized statement by providing the generation model with the set of transformation policies and the anchor statement.
15. The method of any of the embodiments described above, further comprising: receiving, from a first entity, natural language text in association with a first prompting statement; and storing the natural language text for use as the anchor statement in association with the first prompting statement.
16. The method of any of the embodiments described above, further comprising: storing a first natural language statement in a first anchor statement database and storing a second natural language statement in a second anchor statement database; receiving a request to synthesize natural language statements, wherein the request is associated with a category; and selecting, for use as the anchor statement, the first natural language statement from the first anchor statement database in lieu of a statement stored in the second anchor database based on the category.
17. The method of any of the embodiments described above, wherein the anchor statement is a portion of program code written in a programming language.
18. The method of any of the embodiments described above, wherein the anchor statement comprises a first natural statement provided by a first entity and a second natural language statement provided by a second entity.
19. The method of any of the embodiments described above, further comprising: obtaining a priority score associated with a multi-turn conversation comprising a set of natural language statements; determining a result indicating that the priority score exceeds a score threshold; and storing a first statement of the multi-turn conversation in a database, wherein generating the synthesized statement comprises using first statement as the anchor statement.
20. The method of any of the embodiments described above, wherein the result is a later result, and wherein determining the candidate label comprises using an evaluation language model to determine the candidate label, further comprising: generating an earlier synthesized statement based on the anchor statement; determining an earlier result indicating that the set of criteria is not satisfied; obtaining a text sequence indicating a chain-of-thought reasoning output produced by the evaluation language model; determining a criterion of the set of criteria that is not satisfied based on the text sequence; and constructing recalibration instructions based on a portion of the text sequence associated with the criterion, wherein generating the synthesized statement comprises generating the synthesized statement based on the recalibration instructions.
21. The method of any of the embodiments described above, wherein recalibration instructions is first recalibration instructions, and wherein constructing the recalibration instructions comprises retrieving previous recalibration instructions based on a previous operation to construct a previous synthesized statement based on the anchor statement, wherein constructing the recalibration instructions comprises constructing the recalibration instructions based on at least a portion of the previous recalibration instructions.
22. The method of any of the embodiments described above, wherein the scope label model comprises a large language model, and wherein determining a candidate label comprises providing the large language model with the label definition dataset and instructions to assign a label to the synthesized statement based on the label definition dataset.
23. The method of any of the embodiments described above, wherein: generating a synthesized statement comprises generating the synthesized statement based on a set of transformation policies; and determining the result further comprises: providing the synthesized statement and a document indicating the set of transformation policies to an evaluation language model; and obtaining an output from the evaluation language model indicating that the set of transformation policies is satisfied based on the synthesized statement.
24. The method of any of the embodiments described above, wherein determining the result indicating whether the set of criteria is satisfied comprises: generating a confidence score corresponding with a first criterion of the set of criteria; and determining that the confidence score exceeds a confidence score threshold.
25. The method of any of the embodiments described above, wherein the scope label model comprises a classifier model, and wherein determining the candidate label comprises generating the candidate label by providing the classifier model with the second vector.
26. The method of any of the embodiments described above, wherein the result is a first result, further comprising: generating a predicted label by providing the synthesized statement to a classification model; determining a second result indicating whether the predicted label matches the first label; and storing the synthesized statement in a data store storing synthesized data based on the second result.
27. The method of any of the embodiments described above, further comprising: determining that a first text sequence is part of a same conversation as a second text sequence; and concatenating the first text sequence with the second text sequence to form the synthesized statement before generating the synthesized statement based on the anchor statement.
28. A tangible, non-transitory, machine-readable medium storing instructions that, when executed by a data processing apparatus, cause the data processing apparatus to perform operations comprising those of any of embodiments 1-22.
29. A system comprising one or more processors; and memory storing instructions that, when executed by the processors, cause the processors to effectuate operations comprising those of any of embodiments 1-22.
30. A system comprising means for performing any of embodiments 1-22.

## Claims

1. A system for generating and validating synthetic natural language statements from anchor statements using a radius-based constraint, the system comprising:
one or more processors and media storing program code that, when executed by the one or more processors, causes operations comprising:
generating a synthesized natural language statement based on an anchor statement that is used as a user-provided natural language statement, the anchor statement associated with a first label;
generating a first vector in an embedding space by providing the anchor statement to an embedding model and a second vector in the embedding space by providing the synthesized natural language statement to the embedding model;
determining a candidate scope label by providing a scope label model with the synthesized natural language statement a label definition dataset comprising a first label-definition pair indicating the first label and a first definition associated with the first label;
determining that (1) a first criterion for increasing statement heterogeneity is satisfied, the first criterion requiring that an embedding space distance between the first vector and the second vector exceeds a pre-defined distance threshold and (2) a second criterion for bounding heterogeneity is satisfied, the second criterion requiring that the candidate scope label matches the first label; and
storing the synthesized natural language statement in a data store storing synthesized data by validating the synthesized natural language statement based on the first criterion and the second criterion being satisfied.

2. A method for generating and validating synthesized statements, comprising:
generating a synthesized statement based on an anchor statement, the anchor statement associated with a first label;
generating a first vector by providing the anchor statement to an embedding model and a second vector by providing the synthesized statement to the embedding model;
determining a candidate label by providing a scope label model with the synthesized statement and with a label definition dataset indicating the first label and a first definition associated with the first label;
determining a result indicating whether a set of criteria is satisfied by determining that (1) an embedding space distance between the first vector and the second vector exceeds a pre-defined distance threshold and (2) the candidate label matches the first label; and
validating the synthesized statement for storage in a data store storing synthesized data based on the result.

3. The method of claim 2, wherein the result is a first result, and wherein determining the candidate label comprises using an evaluation language model to determine the candidate label, further comprising:
generating an earlier synthesized statement based on the anchor statement;
determining an alternative result indicating that the set of criteria is not satisfied;
obtaining a text sequence indicating a chain-of-thought reasoning output produced by the evaluation language model;
determining a criterion of the set of criteria that is not satisfied based on the text sequence; and
constructing recalibration instructions based on criterion-relevant text of the text sequence associated with the criterion, wherein generating the synthesized statement comprises generating the synthesized statement based on the recalibration instructions;
wherein, optionally, the recalibration instructions is first recalibration instructions, and wherein constructing the recalibration instructions comprises retrieving previous recalibration instructions based on a previous operation to construct a previous synthesized statement based on the anchor statement, wherein constructing the recalibration instructions comprises constructing the recalibration instructions based on at least a portion of the previous recalibration instructions.

4. The method of claim 2, wherein the result is a later result, and wherein determining the candidate label comprises using an evaluation language model to determine the candidate label, further comprising:
generating an earlier synthesized statement based on the anchor statement;
determining an earlier result indicating that the set of criteria is not satisfied;
obtaining a text sequence indicating a chain-of-thought reasoning output produced by the evaluation language model;
determining a criterion of the set of criteria that is not satisfied based on the text sequence; and
constructing recalibration instructions based on a portion of the text sequence associated with the criterion, wherein generating the synthesized statement comprises generating the synthesized statement based on the recalibration instructions

5. The method of any one of claims 2 to 4, wherein:
(a) the scope label model comprises a large language model, and wherein determining the candidate label comprises providing the large language model with the label definition dataset and instructions to assign a label to the synthesized statement based on the label definition dataset; or
(b) the scope label model comprises a classifier model, and wherein determining the candidate label comprises generating the candidate label by providing the classifier model with the second vector.

6. The method of any one of claims 2 to 5, wherein:
generating the synthesized statement comprises generating the synthesized statement based on a set of transformation policies;
determining the result further comprises:
providing the synthesized statement and a document indicating the set of transformation policies to an evaluation language model; and
obtaining an output from the evaluation language model indicating that the set of transformation policies is satisfied based on the synthesized statement.

7. The method of any one of claims 2 to 6, wherein determining the result indicating whether the set of criteria is satisfied comprises:
generating a confidence score corresponding with a first criterion of the set of criteria; and
determining that the confidence score exceeds a confidence score threshold.

8. The method of any one of claims 2 to 7, wherein the result is a first result, further comprising:
generating a predicted label by providing the synthesized statement to a classification model;
determining a second result indicating whether the predicted label matches the first label; and
storing the synthesized statement in the data store based on the second result.

9. The method of any one of claims 2 to 8, further comprising:
determining that a first text sequence is part of a same conversation as a second text sequence; and
concatenating the first text sequence with the second text sequence to form the synthesized statement before generating the synthesized statement based on the anchor statement.

10. The method of any one of claims 2 to 9, further comprising:
receiving a request at an application program interface (API) endpoint associated with a generation model; and
determining, based on the request, a set of transformation policies, wherein generating the synthesized statement comprises generating the synthesized statement by providing the generation model with the set of transformation policies and the anchor statement.

11. The method of any one of claims 2 to 10, further comprising:
receiving, from a first entity, natural language text in association with a first prompting statement; and
storing the natural language text for use as the anchor statement in association with the first prompting statement.

12. The method of any one of claims 2 to 11, further comprising:
storing a first natural language statement in a first anchor statement database and storing a second natural language statement in a second anchor statement database;
receiving a request to synthesize natural language statements, wherein the request is associated with a category; and
selecting, for use as the anchor statement, the first natural language statement from the first anchor statement database in lieu of a statement stored in the second anchor statement database based on the category.

13. The method of any one of claims 2 to 12, wherein:
(a) the anchor statement is a portion of program code written in a programming language; or
(b) the anchor statement comprises a first natural statement provided by a first entity and a second natural language statement provided by a second entity.

14. The method of any one of claims 2 to 13, further comprising:
obtaining a priority score associated with a multi-turn conversation comprising a set of natural language statements;
determining a result indicating that the priority score exceeds a score threshold; and
storing a first statement of the multi-turn conversation in a database, wherein generating the synthesized statement comprises using the first statement as the anchor statement.

15. A computer program that, when executed by one or more processors, causes the one or more processors to carry out the method of any one of claims 2 to 14.
